Europäisches Patentamt

European Patent Office

Office européen des brevets

(11) Publication number: **0 484 707 A1**

# EUROPEAN PATENT APPLICATION

(21) Application number: **91117620.4**

(22) Date of filing: **16.10.91**

(51) Int. Cl.⁵: **A21C 11/16**

(30) Priority: **06.11.90 IT 4172490**

(43) Date of publication of application:
**13.05.92 Bulletin 92/20**

(84) Designated Contracting States:
**AT BE CH DE DK ES FR GB GR IT LI LU NL SE**

(71) Applicant: **Vettore, Agostino**
**Via Musone, 10 bis**
**I-35135 Padova(IT)**

(72) Inventor: **Vettore, Agostino**
**Via Musone, 10 bis**
**I-35135 Padova(IT)**

(74) Representative: **Cantaluppi, Stefano et al**
**c/o Jacobacci-Casetta & Perani S.p.A. Via**
**Berchet 9**
**I-35131 Padova(IT)**

(54) **A machine for extruding soft-textured alimentary pastes.**

(57) A machine for extruding an alimentary paste is disclosed which comprises a housing (2) defining an extrusion chamber (4), an extrusion plate (7) through which the paste is extruded out of the chamber, a cutter means (11) for cutting the extruded paste from the extrusion plate into lumps, and in which the free end of the extrusion plate juts out of the housing, close to the cutter means.

Fig. 1

This invention relates to a machine for extruding an alimentary paste, being of a type which comprises a housing with an extrusion chamber defined therein in which said paste is fed and compressed, an extrusion plate for extruding the paste out of said chamber, and a cutter means for cutting the extruded paste issuing from the extrusion plate into sections.

The making of some pastry products, e.g. pancakes or doughnuts, involves preparation of lumps from slugs of an alimentary paste having a soft texture. At small shops, this operation is performed by hand. To provide a batch of such lumps, an operative would load a paste of a desired texture and composition into a confectioners squirt pouch which is then squeezed reiterately to. deliver the paste in sections having the dimensions and shape of the desired lumps.

Among the disadvantages of this procedure is the comparative slowness of the lump forming operation. Further, having the paste extruded by squeezing it out of the squirt pouch results in waste formation and fouling. Waste paste, which forms especially between successive squeeze cycles and after each use of the pouch, is an obviously undesired loss of product which may represent quite a significant proportion in extreme cases.

Another problem is the need to maintain a uniform size for the lumps formed, both to impart a better appearance to the end product and for commercial reasons. This problem is currently circumvented by just relying on the skill of the operative detached to the job.

Available are machines for extruding such alimentary pastes as durum wheat dough, etc., arranged to extrude and cut into homogeneous size lumps a paste of relatively thick texture. In general, the paste is loaded into a chamber and extruded under compression through an extrusion plate which has one or more orifices with desired shapes and dimensions. A cutter means, arranged to move across the outer wall of the extrusion plate in near-contact therewith, cuts the extrudate into lumps of a desired size.

However, such prior machines cannot accommodate very soft alimentary pastes for extrusion and lumping because their yielding nature makes operation of the knives employed to cut the extrudate awckward in the extreme if not altogether impossible. It is found, indeed, that the use of such known machines to extrude pastes having the above-mentioned texture -- as are typical of the pastry employed for making pancakes or doughnuts -- directly and unavoidably results in the extruding and cutting mechanism becoming fouled and the extruded product disintegrating.

The problem addressed by this invention is, therefore, that of providing a machine for extruding soft texture pastes, whose structure and operation are designed to overcome the above-mentioned drawbacks with which the prior art is beset.

This problem is solved, according to the invention, by a machine as indicated in the preamble being characterized in that said extrusion plate comprises a body having an extrusion orifice defined on its free end, said body projecting some distance out of said housing with said orifice positioned close to the cutter means.

The invention is based moreover, in its broadest aspect, on the observation that the outflowing extrudate will retain its firmness (i.e. will not foul the extrusion plate) when the internal cohesive forces of the paste being processed are greater than the surface forces of interaction with the surrounding materials in contact therewith. This result is sought by minimizing the area of the outer extrusion plate surfaces adjacent to the extrusion orifice.

The invention will be now described in greater detail with reference to a preferred embodiment thereof, shown by way of example and not of limitation in the accompanying drawings, in which:

Figure 1 is a schematical, longitudinal section view of a machine for extruding soft texture pastes;

Figure 2 shows schematically, in longitudinal section, a modified embodiment of the machine in Figure 1;

Figure 3 is a front view of a detail related to the cutter means employed in the implementation of the invention;

Figure 4 is a sectional view of a detail related to the extrusion plate employed in the implementation of the invention; and

Figures 5 and 6 are front and side views, respectively, showing schematically a detail of the machine depicted in the preceding Figures.

Generally shown at 1 in the drawing figures is a machine according to the invention for extruding soft texture pastes.

The machine 1 comprises a cylindrical housing 2 which is closed at its opposed axial ends by respective flanges 3a, 3b, and defines a chamber 4 on its interior, which chamber is supplied, through a hopper 5, an alimentary paste having a desired composition and texture for making pancakes or doughnuts, for example.

Borne rotatably inside the chamber 4 is an auger 6 or another pressure means which is effective to force the paste in the direction toward the flange 3a and extrude it out of an extrusion plate 7 mounted eccentrically to said flange and being arranged to identify an extrusion axis x lying parallel to the auger 6 axis.

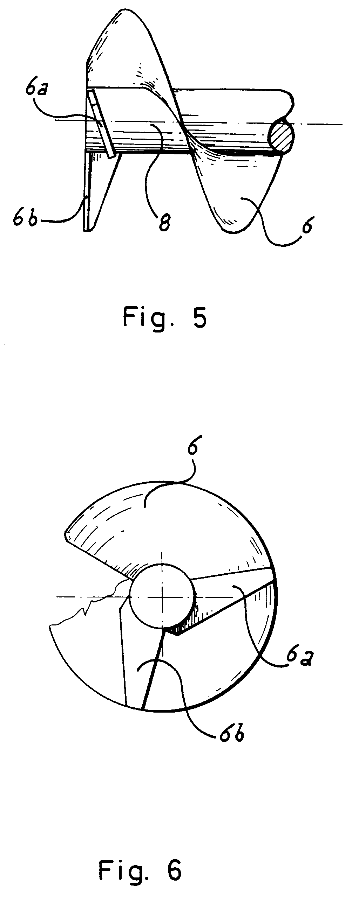

In a preferred embodiment shown in Figures 5 and 6, the end portion of the auger 6 located next to the extrusion plate 7 is provided with two or more auxiliary helical blades 6a,b which lie at equal distance from each other and the free edge of the auger 6 and are effective to enhance a homogeneous flow of the paste being extruded through the extrusion plate 7.

The auger 6 has a tubular drive shaft 8 and is driven rotatively about the axis of the latter by a variable speed gear motor 9 coupled to the flange 3b.

A second shaft 10 is arranged to carry and rotate a cutter means generally indicated at 11. Said shaft 10 is driven rotatively by a second variable speed gear motor 12.

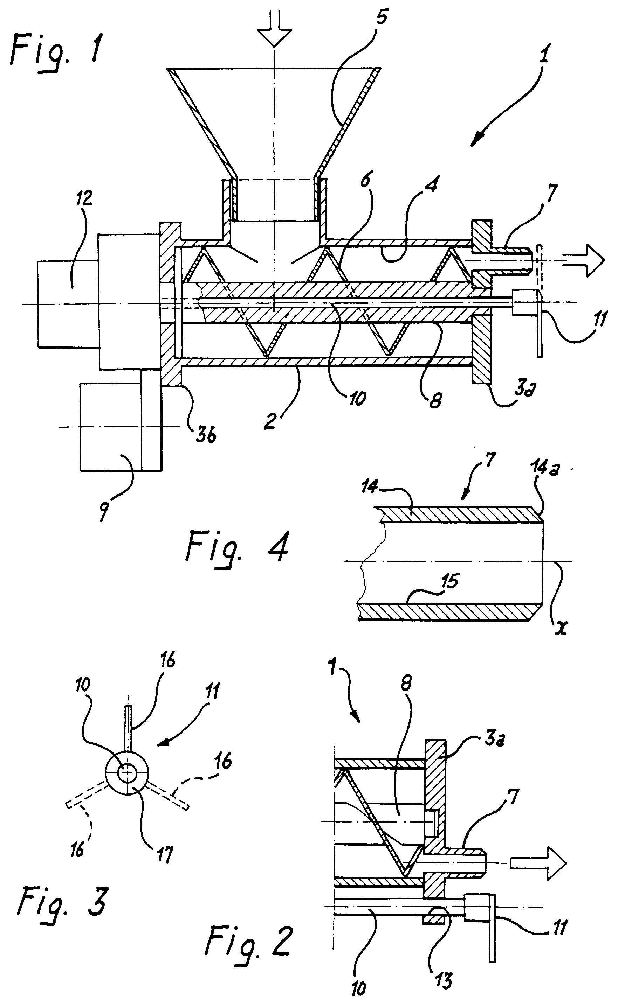

In a first embodiment, shown in Figure 1, the second shaft 10 fits coaxially within shaft 8. In a second embodiment, as shown in Figure 2 wherein similar parts are denoted by the same reference numerals, the shaft 10 is supported on the housing 2 exterior so that one end thereof is received rotatably in a seat 13 formed in the flange 3a.

The extrusion plate 7 comprises a tubular body 14 jutting some distance (showing to be of at least 4 mm) out of the flange 3a and having a free end 14a tapered into a minimal end surface area. Defined within the body 14 is a cylindrical cavity 15 having an axis x and providing an extrusion orifice on its free end 14a.

The extrusion plate 7 is preferably mounted to the flange 3a detachably, such as by thread, bayonet, or the like engagement, whereby it can be readily exchanged with different size plates.

By minimizing the area of the outer extrusion plate surfaces adjacent to the extrusion orifice, the internal cohesion forces of the paste being processed can be made greater than the surface forces of interaction with the surrounding materials in contact therewith, thus enabling the outflowing extrudate to retain its firmness (i.e. preventing it from fouling the extrusion plate).

The cutter means 11 comprises one or more knives 16 which fit detachably along a radial direction onto a hub 17, in turn keyed to the free end of the second shaft 10. In a preferred embodiment, the hub 17 is mounted removably to the shaft 10, thereby being readily exchangable with another hub carrying a different number of knives. This feature improves the machine adjustment range for a given variation of the second shaft 10 speed.

To further enhance the cutter anti-fouling feature, the knives would comprise sections of piano wire or equivalent rod-like stock having a diameter below about 6 mm.

This machine 1 operates as follows. A paste having a desired texture is fed through the hopper 5 into the chamber 4, inside which it will be forced toward the flange 3a by the auger 6. The compressed paste is, therefore, forced out of the extrusion plate 7 at a rate which is proportional to the auger 6 rotational speed about its axis. Accordingly, by controlling the output rpm of the gear motor 9 as appropriate, a first setting can be obtained for the inventive machine.

Concurrently therewith, the second shaft 10 and the cutter means keyed thereto will be driven rotatively at a predetermined angular velocity dependent on the gear motor 12 setting. Each time that they are moved across the extrusion orifice, the knives 16 will cut off one piece or lump of paste whose dimension along the running direction of the extrudate depends both on the outflowing speed from the extrusion orifice 1, which can be adjusted as mentioned by controlling the rpm of the auger 6, and the rate at which a knife interferes with the extrudate, which rate is tied to both the rpm of the second shaft 10 and the number of the knives provided on the hub 17.

Among the major advantages of this invention is that it allows the extrusion of pastes having any desired texture, and in particular of soft pastes, without affecting the shape of the lump yield. In addition, fouling of the cutter means and the extrusion plate is positively prevented.

A further advantage is that paste wastage can be avoided and that the lump forming operation is performed in full observance of the sanitary regulations. Also, the machine can be more easily and effectively cleaned after use. Not least, the ability to accurately control the size of the extruded and cut lumps significantly improves the dimensional homogeneity of the products obtained.

## Claims

1. A machine for extruding a soft alimentary paste, comprising a housing (2) with an extrusion chamber (4) defined therein in which said paste is fed and compressed, an extrusion plate (7) for extruding the paste out of said chamber, and a cutter means (11) for cutting the extruded paste issuing from the extrusion plate into sections, characterized in that said extrusion plate comprises a body (14) having an extrusion orifice (14a) defined on its free end, said body projecting some distance out of said housing with said orifice positioned close to the cutter means.

2. A machine according to Claim 1, wherein the body (14) of the extrusion plate (7) is shaped to minimize the area of the outer extrusion plate surfaces adjacent to the extrusion orifice.

3. A machine according to Claim 2, wherein said extrusion plate body is tapered in the direction toward the extrusion orifice.

4. A machine according to Claim 1, wherein said cutter means comprises at least one rod-shaped knife (16) movable in a plane intersecting the outflow of extruded paste from said extrusion plate (7).

5. A machine according to Claim 4, wherein said rod-shaped knife (16) has a diameter of about 6 mm or lower.

6. A machine according to Claim 4, wherein said at least one knife (16) extends radially from a hub (17) removably keyed to the end of a powered drive shaft (10).

7. A machine according to Claim 4, wherein said at least one knife (16) is removably attached to said hub (17).

8. A machine according to Claim 6, wherein a power driven auger (6) is provided within said chamber to compress said paste, said auger and said shaft (10) carrying said knives being associated with respective motive means (9,12) operated at independently controllable speeds.

9. A machine according to Claim 1, wherein a power driven auger is provided within said chamber to compress said paste, said auger being provided with auxiliary helical blades (6a,b) at least in the vicinity of said extrusion plate.

Fig. 1

Fig. 4

Fig. 3

Fig. 2

Fig. 5

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 102 232 (NABISCO BRANDS INC.) <br> * page 2, line 9 - page 3, line 24; figure 2 * <br> --- | 1-7,9 | A21C11/16 |
| X | US-A-4 240 779 (B.G. TURK) <br> * abstract; figures 2,4 * <br> --- | 1,2 | |
| A | EP-A-0 022 090 (R. BIALETTI & C.S.P.A.) <br> * abstract; figures 2,8-10 * <br> --- | 6,7 | |
| A | EP-A-0 050 409 (OSROW PRODUCTS CORP.) <br> * page 9, line 1 - line 33; figures 2,3 * <br> --- | 9 | |
| A | EP-A-0 236 134 (NABISCO BRANDS INC.) <br> ----- | | |
| | | | **TECHNICAL FIELDS SEARCHED (Int. Cl.5)** |
| | | | A21C |

The present search report has been drawn up for all claims

| Place of search | Date of completion of the search | Examiner |
|---|---|---|
| THE HAGUE | 31 JANUARY 1992 | FRANKS N.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)